# EUROPÄISCHE PATENTSCHRIFT

(11) **EP 2 726 779 B1**
(45) Veröffentlichungstag und Bekanntmachung des Hinweises auf die Patenterteilung: **19.08.2015**
(21) Anmeldenummer: 12738051.7
(22) Anmeldetag: 26.06.2012
(51) Int. Cl.: F21V 5/04, F21V 7/00, F21V 5/00, G02B 3/00

(54) **ANORDNUNG ZUR LICHTABGABE MIT PUNKTFÖRMIGEN LICHTQUELLEN UND LICHTLENKUNGSELEMENT**
ARRANGEMENT FOR OUTPUTTING LIGHT WITH PUNCTIFORM LIGHT SOURCES AND LIGHT DEFLECTION ELEMENT
ENSEMBLE ÉMETTEUR DE LUMIÈRE À SOURCES DE LUMIÈRE PONCTUELLES ET ÉLÉMENT DE GUIDAGE DE LUMIÈRE

(30) Priorität: 29.06.2011 DE 102011078287
(43) Veröffentlichungstag der Anmeldung: 07.05.2014
(73) Patentinhaber: Zumtobel Lighting GmbH, 6850 Dornbirn (AT)
(72) Erfinder: EBNER, Stephan, A-6850 Dornbirn (AT)
(74) Vertreter: Thun, Clemens
(86) Internationale Anmeldenummer: PCT/EP2012/062307
(87) Internationale Veröffentlichungsnummer: WO 2013/000887

(56) Entgegenhaltungen:
- WO-A2-02/33449
- US-A1- 2006 034 094

## Beschreibung

Die vorliegende Erfindung betrifft eine Anordnung zur Lichtabgabe mit im Wesentlichen punktförmigen Lichtquellen sowie einem Lichtlenkungselement zur Beeinflussung des Lichts der Lichtquellen.

Punktförmige Lichtquellen, insbesondere Halogenleuchtmittel oder LED-basierte Leuchtmittel, sind mittlerweile insbesondere aufgrund ihrer Energieeffizienz in den Mittelpunkt der lichttechnischen Entwicklung gerückt. Dabei ist eine Vielzahl von punktförmigen Lichtquellen in allen Leistungsklassen auf dem Markt erhältlich, sodass alle lichttechnischen Anwendungsfälle mit diesen Lichtquellen realisierbar sind.

Häufig kommt, besonders bei der Beleuchtung von Wohn- und Geschäftsräumen, der Wunsch auf, eine homogene Lichtabgabe über eine große Lichtaustrittsfläche zu verwirklichen, sodass beispielsweise die Lichtabstrahlung homogen von der Decke eines Raumes erfolgen kann. Unter Berücksichtigung von Zuverlässigkeits- und Energieeffizienzaspekten ist die Verwendung einer Vielzahl der erwähnten punktförmigen Lichtquellen wünschenswert.

Jedoch besteht in diesem Fall das Problem, die Lichtabgabe von mehreren punktförmigen Lichtquellen so zu kombinieren bzw. umzuformen, dass sich die gewünschte kombinierte Lichtabgabe - die beispielsweise homogen sein kann - ergibt.

Aus dem Stand der Technik sind dazu großflächige Lichtabgabeelemente bekannt, welche die Lichtabstrahlung mehrerer punktförmiger Lichtquellen kombinieren. Diese können aus mehreren Linsenelementen gebildet werden, wobei die Kombination der Linsenelemente auch einstückig erfolgen kann. Eine vorbekannte Kombination von mehreren Linsenelementen, wie sie beispielsweise aus der WO 02/33449 A2 bekannt ist, sieht vor, jeweils einem der Linsenelemente eine punktförmige Lichtquelle zuzuordnen, wobei die punktförmige Lichtquelle dann in einer Kavität des Linsenelements angeordnet ist. Jedes der Linsenelemente ist dazu ausgebildet, einen Teil des Lichts der zugeordneten Lichtquelle im Wesentlichen direkt abzustrahlen, während ein anderer Teil des Lichts von dem Linsenelement reflektiert wird, sodass sich ein relativ genau abgegrenzter Bereich der Lichtabstrahlung bzw. ein relativ genau abgegrenzter beleuchteter Bereich ergibt, der durch die Lichtabstrahlung des einen Linsenelements illuminiert wird. Die Kombination der Lichtabstrahlung bzw. der beleuchteten Bereiche realisiert dann den gewünschten lichttechnischen Effekt - beispielsweise eine gewünschte homogene Beleuchtung einer Fläche.

Aus der US 2006/0034094 A1 ist ein weiteres optisches Element zur Beeinflussung der Lichtabgabe mehrerer LEDs bekannt. Auch in diesem Fall ist jeder LED ein individueller licht-beeinflussender Bereich zugeordnet, der das Licht der zugehörigen LED in gewünschter Weise beeinflusst.

Aufgabe der Erfindung ist es, ein Lichtabgabeelement sowie ein Verfahren zur Herstellung eines entsprechenden Lichtabgabeelements derart zu verbessern, dass bei einer Anordnung zur Lichtabgabe entsprechend der oben beschriebenen Art auf einfache Art und Weise die Lichtabgabe mehrerer punktförmiger Lichtquellen kombiniert werden kann bzw. die Möglichkeiten zur Herstellung der Anordnung zur Lichtabgabe optimiert werden.

Diese Aufgabe wird mit den Merkmalen der unabhängigen Ansprüche 1, 15 und 16 gelöst. Weiterbildungen der Erfindung sind Gegenstand der abhängigen Ansprüche.

Erfindungsgemäß ist ein Lichtlenkungselement zur Beeinflussung des Lichts von zumindest zwei nebeneinander angeordneten, im Wesentlichen punktförmigen Lichtquellen, mit einer Begrenzungsfläche bzw. einem Begrenzungsflächenabschnitt vorgesehen, welche bzw. welcher im Strahlengang des Lichts sowohl der ersten Lichtquelle als auch der zweiten Lichtquelle angeordnet ist, wobei die Begrenzungsfläche bzw. der Begrenzungsflächenabschnitt eine Lichteintrittsfläche für das Licht der ersten Lichtquelle in das Lichtlenkungselement und die Begrenzungsfläche bzw. der Begrenzungsflächenabschnitt auf seiner von der Lichteintrittsfläche abgewandten Seite gleichzeitig eine Reflexionsfläche für das Licht der zweiten Lichtquelle bildet.

"Nebeneinander angeordnet" ist in diesem Zusammenhang so zu verstehen, dass sich auf dem kürzesten Weg der Verbindung keine weitere Lichtquelle zwischen der ersten und zweiten punktförmigen Lichtquelle befindet.

Bevorzugt sind die "nebeneinander angeordneten" Lichtquellen auf einem gemeinsamen plattenförmigen bzw. ebenen Trägerelement bzw. einer ebenen Trägerfläche angeordnet, so dass sie eine im Wesentlichen identische Lichtabstrahlungsrichtung in Bezug auf das Trägerelement aufweisen.

Eine erfindungsgemäße Anordnung zur Lichtabgabe weist dementsprechend mehrere im Wesentlichen punktförmige Lichtquellen auf, sowie ein Lichtlenkungselement mit einer Begrenzungsfläche bzw. einem Begrenzungsflächenabschnitt, welche bzw. welcher im Strahlengang des Lichts sowohl einer ersten Lichtquelle als auch einer zweiten Lichtquelle angeordnet ist, wobei die Begrenzungsfläche bzw. der Begrenzungsflächenabschnitt eine Lichteintrittsfläche für das Licht der ersten Lichtquelle in das Lichtlenkungselement und die Begrenzungsfläche bzw. der Begrenzungsflächenabschnitt auf seiner von der Lichteintrittsfläche abgewandten Seite gleichzeitig eine Reflexionsfläche für das Licht der zweiten Lichtquelle bildet.

Im Gegensatz zu Lösungen, wie sie aus dem Stand der Technik bekannt sind, weist das erfindungsgemäß ausgestaltete Lichtlenkungselement nunmehr Bereiche auf, welche zur Beeinflussung des Lichts mehrerer Lichtquellen gleichzeitig genutzt werden, hierbei allerdings in Bezug auf die Lichtquellen eine unterschiedliche Funktion - brechend einerseits und reflektierend andererseits - erfüllen. Mit Hilfe dieser sog. kooperativen Bereiche kann insbesondere die Integrationsdichte der punktförmigen Lichtquellen - beispielsweise gegenüber dem Fall, dass separate Linsenelemente vorgesehen sind - erhöht werden, sodass sich vielfältigere Möglichkeiten zur einfachen Kombination der Lichtabgabe mehrerer punktförmiger Lichtquellen ergeben. Darüber hinaus bedingt die erfindungsgemäße Ausgestaltung ebenso Herstellungsvorteile bei der Fertigung des Lichtlenkungselements, da insbesondere die Komplexität des Aufbaus bei gleicher Effizienz verringert werden kann, wie später anhand spezieller Beispiele verdeutlicht wird.

Die im Wesentlichen punktförmigen Lichtquellen können durch eine oder mehrere LEDs gebildet sein, die beispielsweise ein sogenanntes LED-Cluster realisieren. "Im Wesentlichen punktförmig" bedeutet in diesem Fall, dass eine zentralsymmetrische Anordnung (Gruppe) mehrerer LEDs resultiert, welche nur durch die Ausmaße einzelner LEDs bedingte Abweichungen von der Zentralsymmetrie aufweist. Weiterhin sind unter im Wesentlichen punktförmigen Lichtquellen auch Halogenlampen, Glühlampen oder andere Leuchtmittel mit ähnlichen Abmessungen zu verstehen, wobei die Ausdehnung des lichtabstrahlenden Bereichs der Lichtquellen bevorzugt den einstelligen Zentimeterbereich in einer Schnittebene parallel zur Lichtabstrahlungsrichtung der Anordnung zur Lichtabgabe nicht überschreitet.

Bevorzugt sind die Lichtquellen benachbart angeordnet, beispielsweise auf einem gemeinsamen bevorzugt ebenen bzw. plattenförmigen Trägerelement. Das Lichtlenkungselement weist besonders bevorzugt eine ortsfeste Anordnung gegenüber den Lichtquellen auf; beispielsweise kann dies ebenso durch ein gemeinsames Trägerelement realisiert sein. Somit ergibt sich die Möglichkeit, eine festgelegte Lichtabgabe, insbesondere mit einem räumlich festgelegten Anteil an Mischlicht der Lichtquellen, vorzusehen. Jedoch bleibt unberührt, dass eine oder mehrere Lichtquellen beweglich gegenüber dem Lichtlenkungselement angeordnet sein können.

Besonders bevorzugt kann vorgesehen sein, dass das Lichtlenkungselement Kavitäten aufweist, in denen jeweils eine der Lichtquellen angeordnet ist. Die zuvor erwähnten Begrenzungsflächen bzw. Begrenzungsflächenabschnitte bilden hierbei dann den Umfang dieser Kavitäten. Die Lichtlenkung kann dabei dadurch verbessert werden, dass eine oder mehrere der Kavitäten jeweils wenigstens teilweise eine optimierte Lichteintrittsfläche in Form eines sog. Linsenbereichs für das Licht der Lichtquellen bilden. Beispielsweise könnte auch die Bodenfläche der Kavitäten linsenartig ausgestaltet sein.

Besonders bevorzugt kann das Lichtlenkungselement im Wesentlichen plattenförmig ausgebildet sein, um beispielsweise eine besonders kompakte Bauweise auch mit einer hohen Anzahl von Lichtquellen bei gleichzeitig einfacher Fertigung zu ermöglichen. Beispielsweise sind die Kavitäten dabei gegenüber einer Lichtaustrittsfläche des Lichtlenkungselements angeordnet, sodass bevorzugt eine direkte Lichtabgabe über das Lichtlenkungselement bzw. dessen Lichtaustrittsfläche erfolgen kann. Darüber hinaus könnte so beispielsweise leicht ein gemeinsames Trägerelement für die Lichtquellen und das Lichtlenkungselement vorgesehen sein.

In einer Weiterbildung weisen die Kavitäten eine polygonale Grundfläche bzw. eine polygonale Flächenprojektion auf. Somit kann beispielsweise die Dichte der Anordnung der Lichtquellen erhöht werden und darüber hinaus lassen sich so Kombinationen von Kavitäten schaffen, deren Flächenprojektion eine ebene Lichtaustrittsfläche eines Lichtleitelements vollständig abdeckt. Die Flächenprojektion einer einzelnen Kavität oder aller Kavitäten des Lichtlenkungselements weist bevorzugt eine polygonale Form auf.

Eine Weiterbildung der Erfindung sieht ferner vor, dass die Reflexion des Lichts der zweiten Lichtquelle an der erfindungsgemäß ausgestalteten Begrenzungsfläche bzw. dem Begrenzungsflächenabschnitt durch Totalreflexion erfolgt. Somit können beispielsweise semitransparente Abschnitte vermieden werden, die beispielsweise für das Licht der ersten Lichtquelle transparent ausgebildet sind, während sie für das Licht der zweiten Lichtquelle reflektierend beschichtet sind, jedoch ist dies erfindungsgemäß nicht zwingend ausgeschlossen. Im Rahmen der Erfindung ist ebenso möglich, semitransparente Materialien oder entsprechende Beschichtungen insbesondere im Bereich der Begrenzungsfläche bzw. des Begrenzungsflächenabschnitts vorzusehen.

Weiterhin ist denkbar, dass die mit der erfindungsgemäßen Anordnung erzielte Lichtabgabe homogen ist; beispielsweise kann das Lichtlenkungselement zur Kollimation des Lichts der Lichtquellen ausgebildet sein.

In einem Ausführungsbeispiel ist denkbar, dass die gemäß der Erfindung gestaltete Begrenzungsfläche bzw. der Begrenzungsflächenabschnitt eben ausgebildet ist, sodass eine besonders einfache Anordnung der Lichtquellen und eine entsprechende einfach Fertigung des Lichtlenkungselements ermöglicht ist. Ein anderes Ausführungsbeispiel kann weiterhin auch vorsehen, dass die Begrenzungsfläche bzw. der Begrenzungsflächenabschnitt gekrümmt, besonders bevorzugt parabolisch ausgebildet ist. Dabei ist besonders daraufhinzuweisen, dass dies insbesondere eine polygonale Grundform von Kavitäten des Lichtlenkungselements einschließt. Eine besonders optimierte Lichtlenkung kann somit realisiert sein.

Eine Weiterbildung der Erfindung sieht ferner vor, dass das Lichtlenkungselement dazu ausgebildet ist, das Licht der ersten Lichtquelle in eine erste Lichtabstrahlcharakteristik umzuformen und das Licht der zweiten Lichtquelle in eine zweite Lichtabstrahlcharakteristik, wobei die erste bzw. zweite Lichtabstrahlcharakteristik symmetrisch, besonders bevorzugt translationssymmetrisch, zueinander ausgebildet sind. Somit lässt sich beispielsweise eine homogene Lichtabgabe mit einer Vielzahl von im Wesentlichen punktförmigen Lichtquellen realisieren, die in einem konstruktiv besonders einfach zu verwirklichenden Ausführungsbeispiel auch zueinander identisch ausgebildet sein können.

Eine weitere Möglichkeit, die Anordnung zur Lichtabgabe zu verbessern, besteht beispielsweise darin, dass die Anordnung zur Lichtabgabe mehrere Paare von ersten und zweiten Lichtquellen umfasst. Wiederum konstruktiv vorteilhaft sind die mehreren Paare bevorzugt in einer Reihe oder einem zweidimensionalen Raster angeordnet, sodass das Lichtlenkungselement beispielsweise wenigstens eine Achse homogener Lichtabstrahlung ausbildet. Wiederum können mehrere Paare entsprechend benachbart angeordnet sein, d. h. es befinden sich keine weiteren Lichtquellen auf dem kürzesten Weg der Verbindung zwischen den Paaren, jedoch schließt dies die Verwendung von weiteren Lichtquellen nicht aus.

Eine Weiterbildung der Erfindung kann ferner vorsehen, dass die Anordnung zur Lichtabgabe mehrere Lichtquellen mit zueinander unterschiedlicher Lichtabstrahlung umfasst. Beispielsweise ist ein unterschiedliches Farbspektrum bzw. eine unterschiedliche Farbtemperatur, eine unterschiedliche Leuchtdichte die beispielsweise auch polarisationsabhängig unterschiedlich sein kann, denkbar. Beispielsweise kann es sich dabei um LED-Lichtquellen handeln, die bevorzugt als LED-Cluster, besonders bevorzugt im Wesentlichen punktförmig angeordnet sind. Dabei kann insbesondere vorgesehen sein, dass ein oder mehrere LED-Cluster jeweils LED-Lichtquellen mit zueinander unterschiedlicher Lichtabstrahlung (Leuchtdichte, Farbspektrum bzw. Farbtemperatur) aufweist. Besonders bevorzugt sind die Lichtquellen mit zueinander unterschiedlicher Lichtabstrahlung in einem regelmäßigen Raster angeordnet.

Beispielsweise ist in diesem Fall auch denkbar, dass die erste Lichtquelle eine zur zweiten Lichtquelle unterschiedliche Lichtabstrahlung aufweist.

Weiterhin kann ein Verfahren zur Herstellung eines erfindungsgemäßen Lichtlenkungselements die folgenden Schritte umfassen;
A) Herstellen, beispielsweise Spritzgießen, eines im Wesentlichen flächigen Lichtlenkungselements;
B) Formen des Lichtlenkungselements - bevorzugt Schneiden - so, dass die gewünschte Form resultiert.

Bei mehreren Paaren von ersten und zweiten Lichtquellen kann beispielsweise vorgesehen sein, dass Schritt B) so durchgeführt wird, dass jedem Paar von ersten bzw. zweiten Lichtquellen wenigstens eine Begrenzungsfläche bzw. ein Begrenzungsflächenabschnitt zugeordnet ist, die bzw. der eine Lichteintrittsfläche für das Licht der ersten Lichtquelle in das Lichtlenkungselement und gleichzeitig eine Reflexionsfläche für das Licht der zweiten Lichtquelle bildet.

Nachfolgend soll die Erfindung anhand der beiliegenden Zeichnung näher erläutert werden, wobei gleiche Elemente in allen Darstellungen mit den gleichen Bezugszeichen versehen sind. Es zeigen:
- Fig. 1a) bis 1d): ein erstes Ausführungsbeispiel einer Anordnung zur Lichtabgabe;
- Fig. 2a), b): ein zweites Ausführungsbeispiel eines Lichtlenkungselements gemäß der Erfindung;
- Fig. 3a), b): ein drittes Ausführungsbeispiel eines Lichtlenkungselements gemäß der Erfindung;
- Fig. 4: eine Detaildarstellung, welche die Lichtmischung mit Hilfe eines Ausführungsbeispiels einer Anordnung zur Lichtabgabe verdeutlicht;
- Fig. 5: ein Beispiel der Lichtabstrahlung einer einzelnen Lichtquelle mit Hilfe eines Ausführungsbeispiels des Lichtlenkungselements;
- Fig. 6a) bis 6c): ein viertes Ausführungsbeispiel einer Anordnung zur Lichtabgabe;
- Fig. 7a) bis 7c): ein fünftes Ausführungsbeispiel einer Anordnung zur Lichtabgabe;
- Fig. 8a) bis 8d): Ausführungsbeispiele für ein Verfahren zur Herstellung eines Lichtlenkungselements; und
- Fig. 9: eine Darstellung einer Anordnung zur Lichtabgabe nach dem Stand der Technik.

Die Verwendung von punktförmigen Lichtquellen zur flächigen Lichtabstrahlung erfordert immensen konstruktiven und auch herstellungstechnischen Aufwand, um die gewünschte Beleuchtung zu realisieren, da insbesondere das Zusammenwirken mehrerer Lichtquellen berücksichtigt werden muss. Insbesondere resultiert dies häufig in relativ komplizierten Formen eines Lichtlenkungselements, welches die gemeinsame Lichtabgabe mehrerer punktförmiger Lichtquellen realisiert.

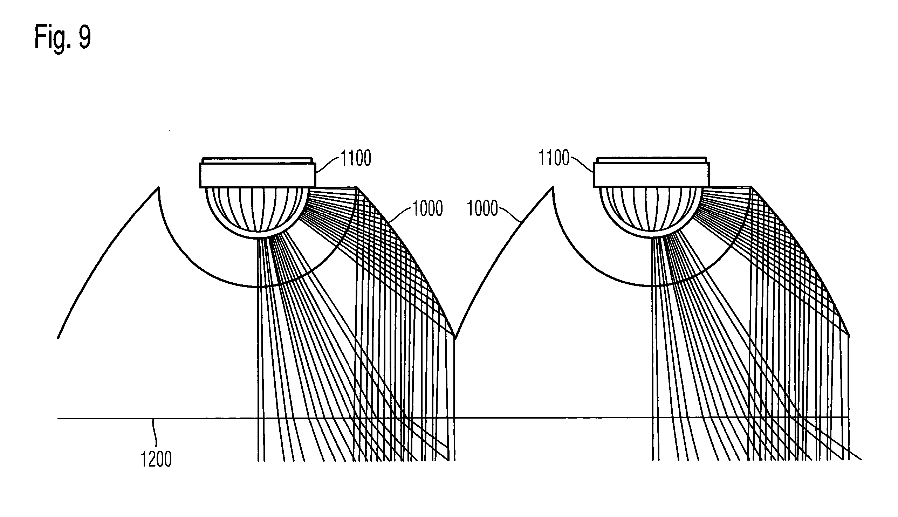

Figur 9 zeigt beispielsweise eine Anordnung zur Lichtabgabe nach dem Stand der Technik, die das Zusammenwirken mehrerer punktförmiger Lichtquellen festlegt. Die dargestellte Anordnung zur Lichtabgabe nach dem Stand der Technik umfasst mehrere transparente Linsenelemente 1000, die zu einem gemeinsamen Lichtlenkungselement mit Hilfe einer plattenförmigen Lichtaustrittsscheibe 1200 verbunden sind. Jedes Linsenelement 1000 weist eine kegelstumpfartige Konfiguration mit einer halbkugelförmigen Vertiefung bzw. Kavität auf, in welcher eine dem Linsenelement 1000 zugeordnete Lichtquelle 1100 angeordnet ist. Die Lichtabstrahlung der Lichtquelle 1100 wird so über einen großen Raumwinkelbereich in das Linsenelement 1000 eingekoppelt. Das Linsenelement ist dabei so geformt, dass ein Teil des eingekoppelten Lichts im Wesentlichen direkt über eine gemeinsame Lichtaustrittsscheibe 1200 abgestrahlt wird. Ein anderer Teil wird an als Reflektor ausgebildeten seitlichen Abschnitten der Linsenelemente 1000 reflektiert - üblicherweise totalreflektiert - und in Richtung der gemeinsamen Lichtaustrittsscheibe 1200 umgelenkt. Bei geeigneter Wahl der Verhältnisse zwischen reflektiertem und direkt abgestrahltem Licht kann beispielsweise eine homogene Lichtabstrahlung über die Lichtaustrittscheibe realisiert werden. Jedoch weist dieses Konzept einige Nachteile auf.

Beispielsweise ist die Dichte der Anordnung der Lichtquellen 1100 durch die Größe einzelner Linsenelemente 1000 begrenzt bzw. bedingt, sodass dies die Möglichkeiten zur Gestaltung der Lichtabgabe limitiert. Weiterhin stellt speziell die Lichtabstrahlung im Übergangsbereich zwischen zwei benachbarten Linsenelementen eine Herausforderung im Design und der Fertigung der Linsenelemente 1000 dar.

Die Erfindung beruht auf dem Bedürfnis, besagten konstruktiven und herstellungstechnischen Aufwand für das Lichtlenkungselement zu verringern, sowie die Möglichkeiten des Zusammenwirkens mehrerer punktförmiger Lichtquellen zu verbessern.

Soll beispielsweise eine homogene Lichtabstrahlung über die gesamte Decke eines Raumes oder zumindest über eine größere Fläche hinweg erzielt werden, so kann auch an den Einsatz von Lichtleitern gedacht werden. Zur Lichtabgabe über größere Flächenbereiche ist jedoch auch hier das Zusammenwirken mehrerer Lichtleiter notwendig, sodass bevorzugt die oben beschriebene Anordnung von Lichtquellen in einem Raster in Betracht gezogen wird. In diesem Fall ist der Überlappungsbereich der Lichtabgabe von wenigstens zwei Lichtquellen so anzupassen, dass die gewünschte Lichtabstrahlung resultiert, was beispielsweise für besagte homogene Lichtabstrahlung besonders schwierig ist. Auch die Realisierung von anderen lichttechnischen Effekten kann mit Hilfe der Erfindung optimiert werden.

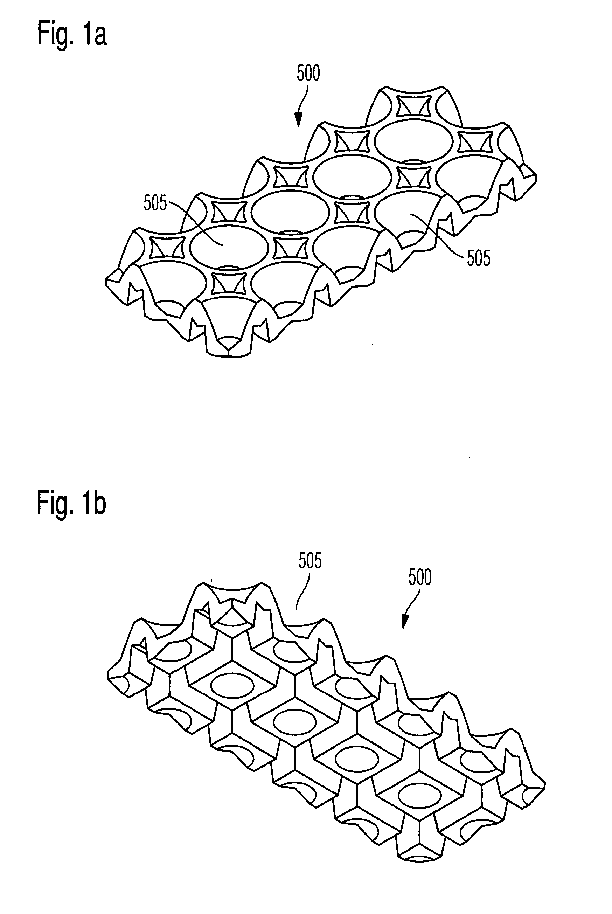

Ein erstes Ausführungsbeispiel der Erfindung ist in den Figuren 1a und 1b in einer perspektivischen Ansicht dargestellt. Ähnlich der vorbeschriebenen Linsenanordnung des Stands der Technik ist in diesem Beispiel vorgesehen, mehrere punktförmige Lichtquellen mit einem Lichtlenkungselement 500 zur Lichtabstrahlung der Lichtquellen zu kombinieren. In dem Ausführungsbeispiel ist eine regelmäßige Anordnung von Lichtquellen - die in den Figuren 1a und 1b nicht dargestellt sind - in einem Raster vorgesehen, wobei die Lichtquellen jeweils ähnlich zu vorbeschriebenen Linsenelementen 1000 in Kavitäten 505 des Lichtlenkungselements angeordnet sind, derart, dass jeder Kavität 505 genau eine Lichtquelle zugeordnet ist. Die Anordnung der Kavitäten 505 ist beispielsweise der Figur 1a, welche eine perspektivische Aufsicht auf das Lichtlenkungselement 500 zeigt, im Detail entnehmbar. Figur 1b zeigt darüber hinaus die den Lichtquellen gegenüberliegende Unterseite des Lichtlenkungselements 500, die eine Lichtaustrittsfläche des Lichtlenkungselements bildet.

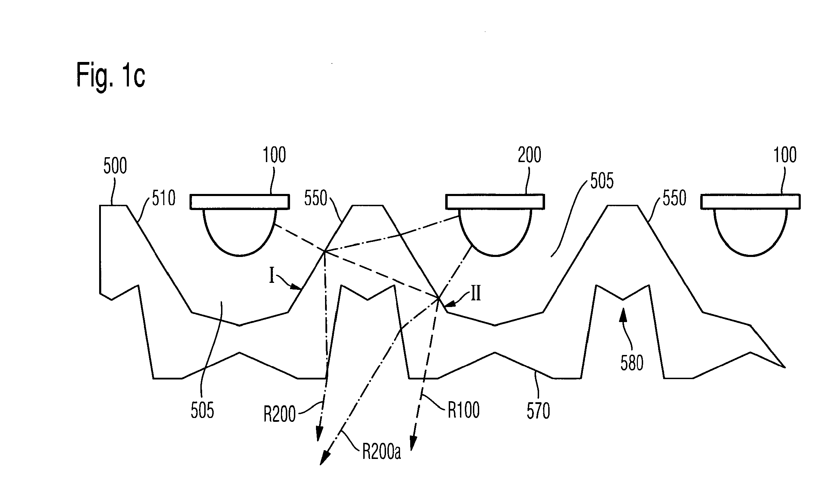

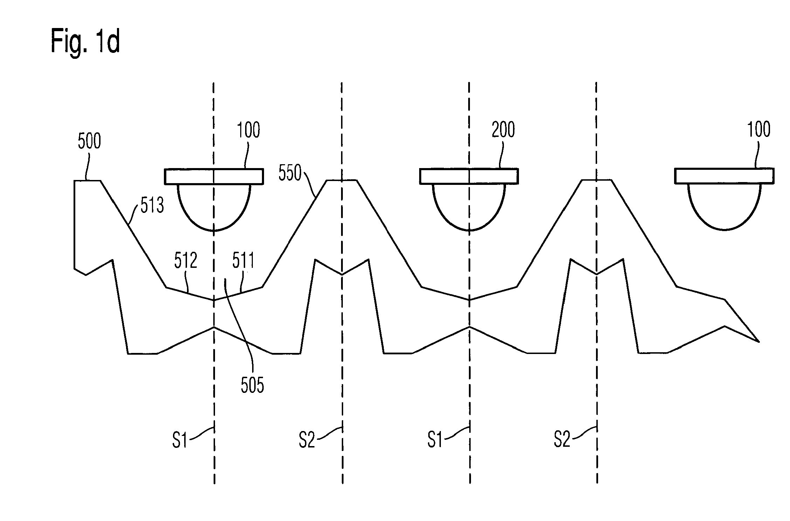

Die Darstellungen der Figuren 1 bis 3 sind jeweils für die Subindizes a und b für verschiedene Ausführungsbeispiele wie folgt identisch zu verstehen. Der Subindex a bezeichnet jeweils eine perspektivische Aufsicht auf das Lichtlenkungselement 500 auf die den Lichtquellen zugewandte Seite des Lichtlenkungselements 500, der Subindex b zeigt jeweils eine perspektivische Ansicht der Lichtabgabefläche des Lichtlenkungselements 500.

Die im Folgenden beschriebene lichttechnische Wirkung der Erfindung ist einer Schnittdarstellung des Ausführungsbeispiels der Figuren 1a und 1b, die in den Figuren 1c und 1d gezeigt ist, im Detail entnehmbar.

Gemäß der Erfindung ist - wie in den Figuren 1c und 1d dargestellt - eine Anordnung zu Lichtabgabe vorgesehen, die mehrere nebeneinander angeordnete Lichtquellen umfasst. Zur Erläuterung der Funktionsweise des Lichtlenkungselements 500 wird nachfolgend von einer ersten punktförmigen Lichtquelle 100 und einer - daneben befindlichen - zweiten punktförmigen Lichtquelle 200 gesprochen, in der Regel wird es sich jedoch um identische Lichtquellen handeln.

Das Lichtlenkungselement 500 besteht aus mehreren linsenartigen Bereichen, die entsprechend der Anordnung der Lichtquellen 100, 200 angeordnet sind. Jeder linsenartige Bereich weist dabei eine Vertiefung bzw. Kavität 505 auf, in der die zugehörige Lichtquelle angeordnet ist. Um das Licht der Lichtquellen effektiv zu nutzen, ist hierbei vorgesehen, dass die Lichtquellen vorzugsweise vollständig bzw. nahezu vollständig innerhalb der zugehörigen Kavität 505 angeordnet sind. Die Flächen 511, 512, 513 und 550 der Kavität 505 bilden dabei dann die entsprechende Lichteintrittsfläche für das Licht. Ein erster Teil des Lichts wird hierbei bei Eintritt in das Lichtlenkungselement 500 derart gebrochen, dass er dieses unmittelbar an der Unterseite wieder verlässt. Ein weiterer Teil hingegen, der auf die Bereiche 513 und 550 trifft, wird - wie nachfolgend erläutert und in Fig. 1c gezeigt - an der Fläche 550 der benachbarten Kavität 505 reflektiert und zur Unterseite hin umgelenkt.

Die Besonderheit der erfindungsgemäßen Anordnung besteht in den bereits erwähnten Begrenzungsflächen bzw. Begrenzungsflächenabschnitten 550, die im Strahlengang des Lichts sowohl der ersten punktförmigen Lichtquelle 100 als auch der zweiten punktförmigen Lichtquelle 200 liegen. Dabei bildet die Begrenzungsfläche bzw. der Begrenzungsflächenabschnitt 550 einerseits eine Lichteintrittsfläche für das Licht der ersten punktförmigen Lichtquelle 100 und die Begrenzungsfläche bzw. der Begrenzungsflächenabschnitt 550 andererseits auf seiner von der Lichteintrittsfläche abgewandten Seite gleichzeitig eine Reflexionsfläche für das Licht der zweiten punktförmigen Lichtquelle 200, wie dies die in Fig. 1c gezeigten Strahlenverläufe zeigen.

Exemplarisch ist die Lichtmischung anhand der Lichtstrahlen R100, ausgehend von der ersten punktförmigen Lichtquelle 100, und R200a, ausgehend von der zweiten punktförmigen Lichtquelle 200 dargestellt. Der Lichtstrahl R100 wird an der Begrenzungsfläche II so reflektiert, dass er das Lichtlenkungselement 500 annähernd unter dem gleichen Austrittswinkel verlässt, wie der Lichtstrahl R200a. Die erfindungsgemäße Ausgestaltung der Begrenzungsfläche I ist darüber hinaus mit Hilfe der Lichtstrahlen R100 und R200 verdeutlicht. Der Lichtstrahl R100 tritt im Bereich der Begrenzungsfläche I bzw. 550 in das Lichtlenkungselement 500 ein, während der Lichtstrahl R200 an gleicher Stelle der Begrenzungsfläche I bzw. 550 reflektiert wird und so wiederum ein Bereich des gemeinsamen Lichtweges des Lichts mehrerer punktförmiger Lichtquellen mit Hilfe der erfindungsgemäßen Begrenzungsfläche I bzw. 550 festgelegt ist.

Ein Zusammenwirken von wenigstens zwei punktförmigen Lichtquellen 100, 200 kann so mit Hilfe der Erfindung besonders vorteilhaft optimiert und angepasst werden. Die Begrenzungsfläche bzw. der Begrenzungsflächenabschnitt 550 ist als Reflexionsfläche ausgebildet; somit lässt sich die Lichtabgabe einer der punktförmigen Lichtquellen - in diesem Fall die Lichtabgabe der zweiten punktförmigen Lichtquelle 200 - räumlich begrenzen. Gleichzeitig dient die Begrenzungsfläche bzw. der Begrenzungsflächenabschnitt 550 als Lichteintrittsfläche des Lichts der anderen punktförmigen Lichtquelle - in diesem Fall der ersten Lichtquelle 100 - sodass ein räumlich begrenzter Überlappbereich der Lichtabstrahlung beider Lichtquellen 100, 200 bereits durch Eigenschaften des Lichtlenkungselements 500 festgelegt wird. Im Gegensatz zur Kombination der Linsenelemente 1000 des Stands der Technik ist somit bereits innerhalb des Lichtlenkungselements ein Bereich der überlappenden Lichtabstrahlung der ersten und zweiten punktförmigen Lichtquelle 100 bzw. 200 festgelegt, sodass ein konstruktiv einfaches Zusammenwirken der Lichtabstrahlung der ersten und zweiten punktförmigen Lichtquelle 100 bzw. 200 erreicht werden kann, welches beispielsweise unabhängig vom Abstand einer beleuchteten Fläche festgelegt sein kann.

Ein weiterer Vorteil der erfindungsgemäßen Lösung besteht ferner darin, dass aufgrund dieser "kooperativen Bereiche" der Linsenanordnung, also der von benachbarten Lichtquellen 100, 200 gemeinsam genutzten und durch die Flächenabschnitte 550 begrenzten Bereiche, die Linsen sozusagen ineinander übergehen und dementsprechend eine kompaktere Anordnung für die Lichtquellen 100, 200 realisiert und eine höhere Leuchtdichte erzielt werden kann.

Im Ausführungsbeispiel der Figuren 1c und 1d ist vorgesehen, dass Reflexion des Lichts der zweiten punktförmigen Lichtquelle 200 an der Begrenzungsfläche bzw. dem Begrenzungsflächenabschnitt 550 durch Totalreflexion erfolgt.

Die Anordnung zur Lichtabgabe kann dabei zur direkten Montage auf bzw. an einem Träger vorgesehen sein, beispielsweise an einer Decke, Trägern einer abgehängten Decke, einer Wand oder Ähnlichem. Darüber hinaus ist aber auch die Integration in ein Leuchtengehäuse bzw. einen Gehäuserahmen denkbar. Bevorzugt bildet das Lichtlenkungselement 500 die einzige Lichtaustrittsfläche der Anordnung zur Lichtabgabe und kann dazu beispielsweise in einer Öffnung eines Leuchtengehäuses angeordnet sein bzw. diese verschließen, oder mit einem Träger so verbunden sein, dass kein zusätzliches Licht aus der Anordnung bzw. der Leuchte austreten kann. Besonders bevorzugt ist das Lichtlenkungselement 500 flächig ausgebildet, d.h. seine Höhenausdehnung unterschreitet sowohl dessen Breiten- als auch dessen Längsausdehnung, sodass die Höhe des Lichtlenkungselements eine Schmalseite des Lichtlenkungselements 500 festlegt, während andere Flächen eine Breitseite des flächigen Lichtlenkungselements 500 bilden. In einer Weiterbildung der Erfindung sind die erste und zweite Lichtquelle 100 bzw. 200 an einer Breitseite des Lichtlenkungselements angeordnet. Besonders bevorzugt bildet eine gegenüberliegende Breitseite eine Lichtaustrittsfläche des Lichtlenkungselements 500.

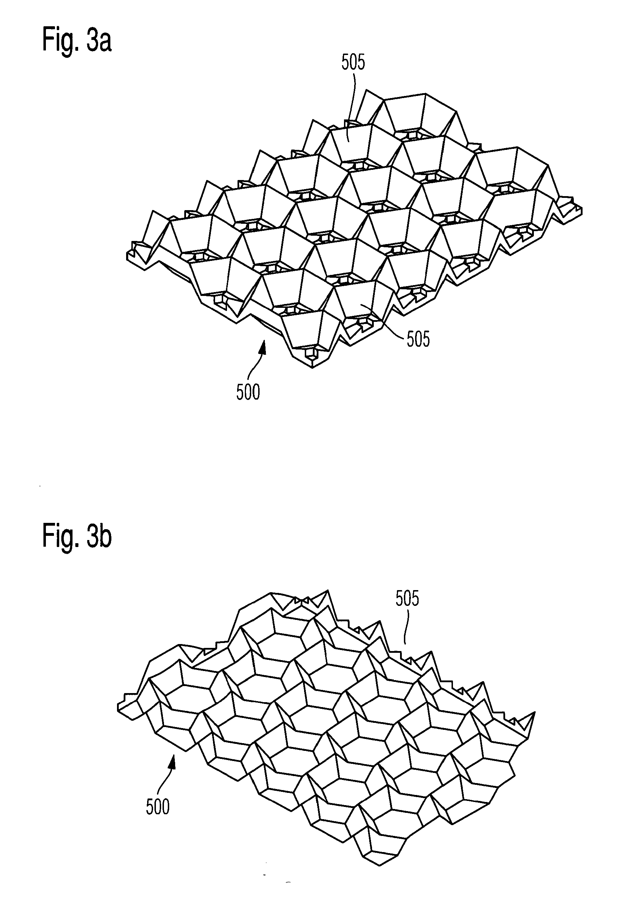

Erfindungsgemäß ist also vorgesehen, optische Flächen des Lichtlenkungselements 500 bzw. bestimmte Bereiche davon für mehrere Lichtquellen gemeinsam zu nutzen. Aufgrund der Tatsache, dass den Lichtquellen zugeordnete optische Elemente auch von benachbarten Lichtquellen genutzt werden, hat das einzelne optische Element eine relativ geringe Baugröße. Insbesondere sind so extrem flache und dünne optische Platten als Lichtlenkungselemente 500 ermöglicht, die auch die Integration einer Vielzahl von ersten und zweiten punktförmigen Lichtquellen 100 bzw. 200 erlauben, sodass beispielsweise die rasterförmige Anordnung der ersten und zweiten Lichtquellen 100 bzw. 200 gemäß der perspektivischen Ansicht der Figuren 1a, b bis 3a, b resultieren kann.

Jede der Lichtquellen kann dabei gleichzeitig die Rolle der ersten und zweiten punktförmigen Lichtquelle 100 bzw. 200 einnehmen, d.h. jede der Lichtquellen wirkt mit jeder unmittelbar benachbarten Lichtquelle über das Lichtlenkungselement 500 so zusammen, dass jede benachbarte Lichtquelle eine zweite punktförmige Lichtquelle 100 im Sinne der Erfindung für die jeweilige Lichtquelle bildet, wobei die jeweilige Lichtquelle dann als erste punktförmige Lichtquelle im Sinne der Erfindung anzusehen ist.

Bevorzugt ist das Lichtlenkungselement 500 aus einem im Wesentlichen transparenten Material ausgebildet, beispielsweise aus Glas, PMMA (Polymethylmetacrylat) oder einem anderen transparenten Kunststoff. Dies schließt nicht aus, dass das Lichtlenkungselement 500 auch Bereiche aus einem nicht transparenten Material aufweist.

Besonders bevorzugt ist das Lichtlenkungselement 500 einstückig ausgebildet; jedoch schließt dies ein, dass beispielsweise für besonders große Lichtaustrittsflächen, das Lichtlenkungselement 500 mehrteilig geformt ist und beispielsweise mehrere flächige Abschnitte aufweist, die miteinander verbindbar, bevorzugt mit integrierten Befestigungsmitteln, ausgestaltet sind. Insbesondere kann so die Fertigung und Montage des Lichtlenkungselements 500 optimiert werden.

Die Anordnung zur Lichtabgabe gemäß den Figuren 1c und 1d ist insbesondere zur homogenen Lichtabstrahlung ausgebildet; jedoch sind je nach Anwendungsfall auch andere Ausgestaltungen denkbar. Das homogene Licht wird im Fall des beschriebenen Ausführungsbeispiels über eine den ersten und zweiten punktförmigen Lichtquellen 100, 200 gegenüberliegende Lichtaustrittsfläche des Lichtlenkungselements 500 abgestrahlt. Insbesondere ist das Lichtlenkungselement 500 zur Kollimation des Lichts der Lichtquellen 100, 200 ausgebildet.

Das flächig ausgebildete Lichtlenkungselement 500 gemäß den Figuren 1c und 1d weist wie bereits erwähnt mehrere Kavitäten 505 auf, in denen jeweils eine der ersten bzw. zweiten punktförmigen Lichtquellen 100 bzw. 200 angeordnet ist. Wie bereits beschrieben ist insbesondere den Figuren 1a und 1b nochmals im Detail die Anordnung der Kavitäten 505 zu entnehmen, die eine andere Darstellung des Ausführungsbeispiels zeigen. Gemäß dem Ausführungsbeispiel sind die Kavitäten in einer Reihe bzw. einem zweidimensionalen Raster angeordnet, wie später noch genauer deutlich wird. Sowohl die Kavitäten als auch die ersten und zweiten punktförmigen Lichtquellen 100, 200 sind dabei gegenüberliegend einer, in Richtung der Flächenausdehnung des Lichtlenkungselements 500 orientierten Lichtaustrittsfläche des Lichtlenkungselements 500 angeordnet. Gleichzeitig bildet, wie vorbeschrieben, die Lichtaustrittsfläche des Lichtlenkungselements 500 auch eine Lichtaustrittsfläche der Anordnung zur Lichtabgabe.

In dem Ausführungsbeispiel der Figuren 1a bis 1d bilden Teile der kavitätsbegrenzenden Fläche 510 eine erfindungsgemäße Begrenzungsfläche bzw. Begrenzungsflächenabschnitt 550. Gemäß Figur 1c und 1d ist der Begrenzungsflächenabschnitt 550 eben ausgebildet, sodass auf besonders einfache Weise eine Lichteintrittsfläche für das Licht der ersten punktförmigen Lichtquelle 100 gebildet werden kann. Darüber hinaus kann auf optimale Weise eine Fläche gegenüber der zweiten punktförmigen Lichtquelle 200 so orientiert sein, dass wenigstens ein Teillichtbündel des von der zweiten punktförmigen Lichtquelle 200 abgestrahlten Lichts flacher als der Totalreflexionswinkel auf die Begrenzungsfläche bzw. den Begrenzungsflächenabschnitt 550 trifft. Eine einfache Anpassbarkeit des Reflexionsbereichs der Begrenzungsfläche bzw. des Begrenzungsflächenabschnitts 550 und damit des Überlappungsbereichs der Lichtabstrahlung der ersten und zweiten punktförmigen Lichtquellen 100, 200 kann so verwirklicht werden.

Die kavitätsbegrenzende Fläche 510 umfasst - an die Begrenzungsfläche bzw. den Begrenzungsflächenabschnitt 550 unmittelbar angrenzend - zwei weitere ebene Flächen 511 und 512, welche den Bodenbereich der Kavität bilden und die zur Lenkung der direkten Lichtabstrahlung der ersten punktförmigen Lichtquelle 100, gegeneinander unter einem stumpfen Winkel, bevorzugt zwischen 120 und 160 Grad geneigt, "V"-förmig angeordnet sind, und so beispielsweise eine Kollimation des Lichts der ersten punktförmigen Lichtquelle 100 erreicht wird.

Weiterhin anschließend an die beiden "V"-förmig angeordneten Flächen 511 bzw. 512 ist eine weitere eben geformte Begrenzungsfläche 513 angeordnet, die eine erfindungsgemäß ausgebildete Begrenzungsfläche bzw. einen Begrenzungsflächenabschnitt 550 für eine weitere, nicht dargestellte, punktförmige Lichtquelle 200 bilden kann. Die nicht dargestellte Lichtquelle ist in diesem Fall spiegelsymmetrisch zu einer Spiegelebene angeordnet, welche die Verbindungslinie der ersten punktförmigen Lichtquelle 100 zur Spitze des "V" der "V"-förmig angeordneten Flächen 511, 512 enthält. In Kombination beschreiben die Flächen 550, 511, 512 und 513 den Querschnitt einer Kavität 505, in der die erste punktförmige Lichtquelle 100 angeordnet ist. Die Spitze des "V" bildet dabei ein Zentrum der Kavität 505, dessen Verbindungslinie mit der ersten Lichtquelle 100 in einer Symmetrieebene der Kavität 505 bzw. einer ersten Symmetrieebene S1 des Lichtlenkungselements 500 liegt, wobei die Lichtabstrahlung der ersten punktförmigen Lichtquelle symmetrisch zu dieser ersten Symmetrieebene S1 des Lichtlenkungselements erfolgt, und die Symmetrieebene S1 insbesondere eine Hauptabstrahlrichtung der ersten punktförmigen Lichtquelle 1 enthalten kann.

Eine weitere zweite Symmetrieebene S2 des Lichtlenkungselements 500 kann jedoch durch eine Normale zur Verbindungslinie der ersten und zweiten punktförmigen Lichtquelle 100 bzw. 200 festgelegt werden. Besagte Normale, welche die Verbindungslinie symmetrisch teilt, ist dabei in der zweiten Symmetrieebene S2 enthalten. Darüber hinaus kann auch vorgesehen sein, dass die Symmetrieebene S2 die Normale besagte Verbindungslinie in einem anderen vorgesehenen Verhältnis teilt, welches jedoch bei der Kombination mehrerer punktförmiger Lichtquellen periodisch reproduziert ist.

Insbesondere können die ersten bzw. zweiten Symmetrieebenen S 1 bzw. S2 in einem regelmäßigen Raster angeordnet sein, sodass eine einfache Kombinationsmöglichkeit mehrere punktförmiger Lichtquellen damit gegeben ist. Dabei ist insbesondere eingeschlossen, dass die Rastergrößen der ersten und zweiten Symmetrieebenen S 1 bzw. S2 unterschiedlich gewählt sind. Entsprechende Weiterbildungen werden im Folgenden noch genauer beschrieben.

Figur 1a zeigt die flächige Ausgestaltung des Lichtlenkungselements 500 der Figuren 1c und 1d genauer. Die Kavitäten 505 sind in diesem Fall im Wesentlichen kegelstumpfförmig gestaltet, wobei die Mantelfläche des Kegelstumpfs den erfindungsgemäßen Begrenzungsflächenabschnitt 550 umfasst. Die von der ersten bzw. zweiten Lichtquelle 100 bzw. 200 abgewandte Deckfläche des Kegelstumpfs weist dabei wiederum selbst die Form eines Kegels auf, dessen Öffnungswinkel vom Öffnungswinkel des Kegelstumpfs abweicht, sodass im Querschnitt die bereits beschriebene Kombination der Flächen 511, 512, 513 und 550 gemäß den Figuren 1c und 1d resultiert und ein kegelförmiger kollimierender Abschnitt des Lichtlenkungselements 500 gebildet ist. Die ersten und zweiten punktförmigen Lichtquellen 100, 200 sind dabei in einem quadratischen Raster angeordnet, und jeweils einer der Kavitäten - die in diesem Fall kegelstumpfförmig ausgebildet sind - zugeordnet. Eine gleichmäßige Anordnung bevorzugt identischer Lichtquellen kann so erreicht werden.

Das quadratische Raster spiegelt sich dabei in der Flächenprojektion der Grundfläche der Kavitäten wieder. Wie in Figur 1b dargestellt, weist die Lichtaustrittsfläche rechteckige bzw. quadratischer Erhebungen auf; jede der Erhebungen formt dabei auf der den ersten bzw. zweiten Lichtquellen 100, 200 zugewandten Seite des Lichtlenkungselements 500 die bereits beschriebene kegelstumpfförmige Kavität. Auf der Deckfläche der Erhebungen ist wiederum ein kegelstumpfförmiges Lichtformungselement 570 angeordnet, das also einen "V"-förmigen Querschnitt aufweist und somit ebenfalls die Kollimation des Lichts verbessert. Darüberhinausgehend sind jedoch noch weitere Lichtformungselemente 570 denkbar, die beispielsweise die direkte Lichtabstrahlung der zugeordneten Lichtquelle in eine Vorzugsrichtung umlenken und die beispielsweise dazu ausgebildet sind, das Licht in diese Vorzugsrichtung kollimiert abzustrahlen.

Die Verbindungsabschnitte der quadratischen Erhebungen und deren Seitenflächen optimieren jeweils Lichtmischelemente 580 zur Mischung des Lichts von benachbarten Lichtquellen 100, 200. Die Seitenflächen und die Verbindungsabschnitte weisen in Kombination im Querschnitt annähernd "W"-Form auf. Diese "W"-Form kann wiederum als die Kombination eines ersten "V"-förmigen Abschnitts, welcher einer Seitenfläche einer quadratischen Erhebung zugeordnet ist, und eines zweiten "V"-förmigen Abschnitts, der einer benachbarten Seitenfläche einer weiteren quadratischen Erhebung zugeordnet ist, betrachtet werden. Die Lichtmischelemente 580 sind bevorzugt im Lichtweg der ersten und zweiten punktförmigen Lichtquelle 100 bzw. 200 der erfindungsgemäßen Begrenzungsfläche bzw. dem Begrenzungsflächenabschnitt 550 nachfolgend angeordnet. Die bezüglich der ersten und zweiten punktförmigen Lichtquellen 100, 200 symmetrische Anordnung, insbesondere symmetrisch zu der Symmetrieebene S2 bedingt dabei gleichzeitig die Festlegung eines Bereichs, in dem die Mischung der Lichtabgabe der ersten und zweiten punktförmigen Lichtquellen erfolgt. In Kombination optimiert der "W"-förmige Abschnitt so durch eine bevorzugt zweifach kollimierende bzw. die Lichtabstrahlung begrenzende Form die Lichtmischung im Bereich zwischen den Kavitäten, also im Bereich der Überlappung der Lichtabstrahlung der ersten und zweiten Lichtquelle 100 bzw. 200.

Eine andere Weiterbildung kann auch vorsehen, dass die Begrenzungsfläche bzw. der Begrenzungsflächenabschnitt 550 gekrümmt ausgebildet ist. Besonders bevorzugt ist die Begrenzungsfläche bzw. der Begrenzungsflächenabschnitt 550 parabolisch geformt, sodass eine Lichtquelle - bevorzugt die erste und zweite Lichtquelle 100 bzw. 200 - im Brennpunkt der zugeordneten Parabel angeordnet sein kann und eine Kollimation wenigstens eines Teilstrahlenbündels der ersten bzw. zweiten punktförmigen Lichtquelle 200 erfolgt. Im dargestellten Ausführungsbeispiel kann beispielsweise vorgesehen sein, dass die Begrenzungsfläche der Kavität, in welcher die erste punktförmige Lichtquelle 100 angeordnet ist, so gekrümmt ist, dass dieser Begrenzungsflächenabschnitt parabolisch so geformt ist, dass die zweite punktförmige Lichtquelle 200 im Brennpunkt zugeordneten der Parabel angeordnet ist.

Vorstehende Weiterbildung schließt ein, dass gekrümmte Bereiche der Begrenzungsfläche bzw. des Begrenzungsflächenabschnitts 550 mit ebenen Bereichen der Begrenzungsfläche bzw. des Begrenzungsflächenabschnitts 550 kombiniert werden. Beispielsweise kann die Kombination gekrümmter Flächen bzw. parabolischer Abschnitte auch mit Abschnitten der kegelstumpfförmigen bzw. kegelförmigen Kavitäten vorgesehen sein.

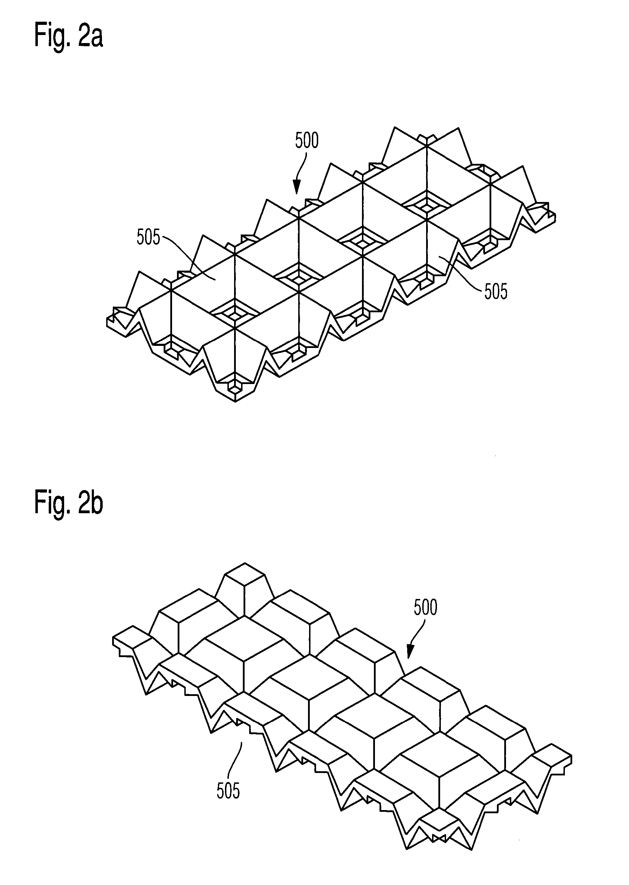

In einem weiteren Ausführungsbeispiel gemäß den Figuren 2a und 2b weist die Kavität 505 eine polygonale Grundfläche, insbesondere eine quadratische Grundfläche, auf, sodass die Flächenprojektion der Kavität 505 die Anordnung der Lichtquellen versetzt wiedergibt. Im Gegensatz zu vorbeschriebenem Ausführungsbeispiel sind die Kavitäten 505 nun pyramidal bzw. pyramidenstumpfartig geformt, wobei jede Seitenfläche der Pyramide bzw. des Pyramidenstumpfs einen erfindungsgemäßen Begrenzungsflächenabschnitt 550, also insbesondere eine Reflexionsfläche und eine Lichteintrittsfläche, bildet, wobei so die Lichteinstrahlung benachbarter Lichtquellen in den Pyramidenstumpf vollständig beschränkt werden kann.

Die Lichtaustrittsfläche weist in diesem Fall ebenfalls quadratische Erhebungen auf; wie im Späteren deutlich wird, kann diese Form jedoch einer beliebigen polygonalen Ausformung der Kavitäten bzw. deren Projektionsfläche angepasst sein, sodass beispielsweise dreieckige, rechteckige, pentagonale, hexagonale oder andere polygonale Erhebung der Lichtaustrittsfläche im Rahmen der Erfindung liegen. Die Lichtmischelemente 580 sind im dargestellten Ausführungsbeispiel der Figuren 2a und 2b durch die Seitenflächen der polygonalen Erhebungen realisiert und weisen einen "V"-förmigen Querschnitt auf, sodass die Lichtaustrittsfläche einerseits optisch besonders ansprechend gestaltet werden kann und andererseits eine besonders vorteilhafte Lichtmischung resultiert. Darüber hinaus kann in diesem Ausführungsbeispiel auf Lichtformungselemente 570 an der Deckfläche der polygonalen Erhebungen verzichtet werden; diese sind, wie aus Figur 2a ersichtlich ist, an der den ersten bzw. zweiten Lichtquellen 100 bzw. 200 zugewandten Innenseite der Kavität, realisiert. Die Grundfläche der Kavität weist, jeder Seitenfläche zugewandt, ein prismenartige, sägezahnartige bzw. dreieckige Erhebung auf, welche die direkte Lichtabstrahlung der der Kavität zugeordneten ersten bzw. zweiten Lichtquellen 100, 200 optimieren, insbesondere aufweiten.

Eine in den Figuren 3a und 3b dargestellte Weiterbildung der Erfindung, insbesondere des Ausführungsbeispiels der Figuren 2a bzw. 2b, zeigt ein Lichtlenkungselement 500, das polygonale, pyramidale Kavitäten 505 mit hexagonaler Grundfläche bzw. polygonale, hexagonale Erhebungen der Lichtaustrittsfläche aufweist. Jede der Seitenflächen ist dabei zur Reflexion des Lichts einer der zweiten punktförmigen Lichtquellen 200 ausgebildet, welche in einer benachbarten Kavität 505 angeordnet ist, sodass der ersten Lichtquelle 100 in diesem Ausführungsbeispiel jeweils sechs zweite Lichtquellen 200 in jeweils einer benachbarten Kavität 505 zugeordnet sind. Die Lichtabgabe der zweiten Lichtquelle 200 kann dabei jeweils gegenüber der ersten Lichtquelle 100 vollständig durch die erfindungsgemäßen Begrenzungsflächen bzw. Begrenzungsflächenabschnitte 550 beschränkt sein, sodass die Kavität 505 für Licht der zugordneten - in diesem Fall der sechs - zweiten Lichtquellen 200 abgeschlossen ist. Dies kann beispielsweise auch für beliebige polygonale Kavitäten 505 bzw. eine beliebige Anzahl benachbarter Lichtquellen realisiert sein. Die Grundfläche der Kavitäten 505 und auch die Lichtmischelemente 580 sind entsprechend dem vorbeschriebenen Ausführungsbeispiel ausgestaltet.

Der Grenzfall einer polygonalen Kavität mit einer hohen Anzahl an Begrenzungsflächen kann dabei durch eine ellipsenförmige bzw. kreisförmige Grundfläche der Kavität beschrieben werden, sodass sich beispielsweise die kegelstumpfförmige Kavität des bereits beschriebenen Ausführungsbeispiels der Figuren 1a bis 1d ergibt.

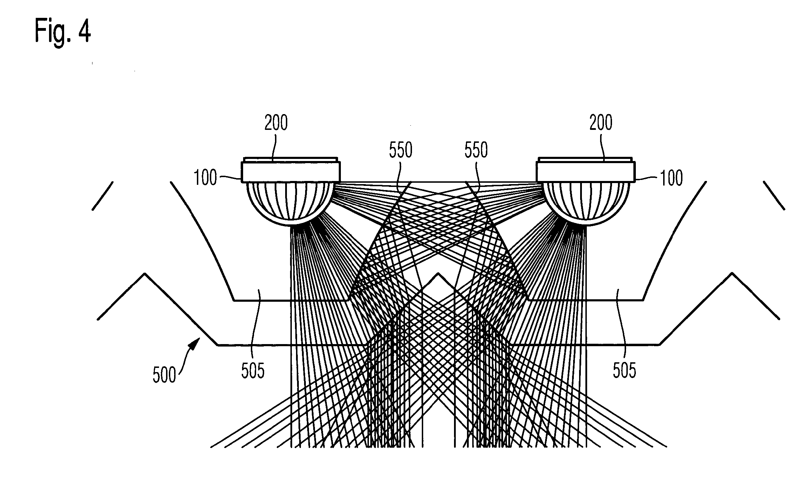

Figur 4 verdeutlicht nochmals die erfindungsgemäße lichttechnische Wirkung der Lichtmischung innerhalb des Lichtlenkungselements 500. Ein Überlappungsbereich der Lichtabstrahlung der ersten und zweiten punktförmigen Lichtquelle 100 bzw. 200 kann unabhängig von der Entfernung der beleuchteten Fläche festgelegt werden kann. Dies bedingt die Möglichkeit optimierten zum Ausgleich von Intensitäts- oder anderen Lichtabstrahlungsunterschieden der ersten und zweiten punktförmigen Lichtquellen 100 bzw. 200 bereits im Lichtlenkungselement 500, sodass beispielsweise eine festgelegte Verblendung der Lichtabgabe erfolgen kann. Somit kann beispielsweise auch eine homogene Lichtabgabe aus dem Lichtlenkungselement 500 verbessert werden.

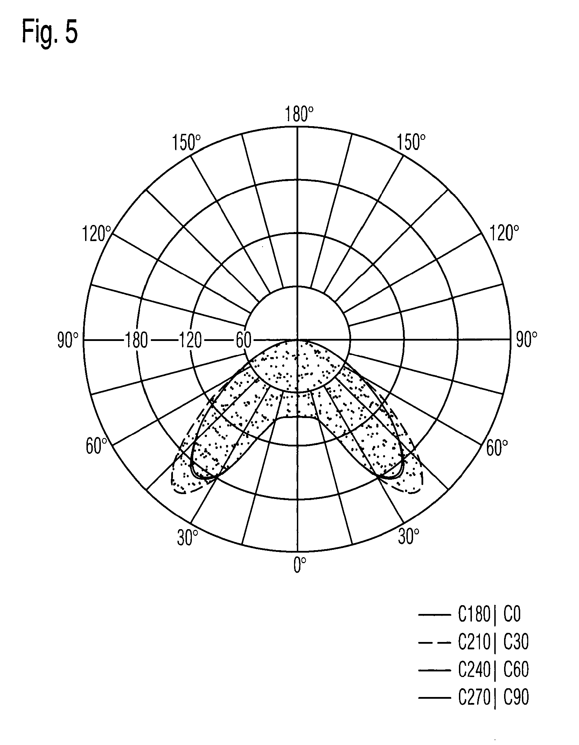

Mit Hilfe der vorbeschriebenen Weiterbildungen kann sowohl angestrebt werden, eine homogene Lichtabstrahlung über die Lichtabgabefläche des Lichtaustrittselements zu erreichen, darüber hinaus ist jedoch auch eine inhomogene Lichtabgabe denkbar, wobei gemäß der Erfindung das Zusammenwirken mehrerer punktförmiger Lichtquellen optimiert ist. Figur 5 zeigt beispielsweise die Lichtabgabe einer Anordnung zur Lichtabgabe mit einem Lichtlenkungselement 500, das eine inhomogene Lichtabgabe realisiert. Die Wahl der Grundflächen der Kavitäten bzw. die polygonale Form der Kavitäten kann insbesondere der gewünschte Lichtabstrahlung angepasst werden, sodass beispielsweise eine rotationssymmetrische, rechteckige, quadratische, kreuzförmige oder eine andere polygonale Lichtverteilung für eine einzelne der ersten bzw. zweiten punktförmigen Lichtquellen erzielt werden kann. Dadurch, dass sich das Raster der Lichtquellen, welches insbesondere durch ein Raster an Symmetrieebenen S 1 beschrieben werden kann, in einem Raster der Symmetrieebenen S2 mit identischer Rastergröße abbildet, kann trotz inhomogener Lichtabstrahlung einer einzelnen Kavität bzw. einer dieser Kavität zugeordneten Lichtquelle (beispielsweise die erste punktförmige Lichtquelle 100) ein Zusammenwirken mit mehreren Lichtquellen so erreicht werden, dass die Gesamtlichtabstrahlung der Anordnung zur Lichtabgabe bezüglich der Leuchtdichte dennoch homogen erscheint. Besonders bevorzugt kann dies auch für eine zu beleuchtende Fläche realisiert sein.

Um weitere lichttechnische Effekte zu erreichen, können besonders vorteilhaft Bereiche akzentuierter - also erhöhter oder erniedrigter - Leuchtdichte dadurch erreicht werden, dass die Rastergröße S2 wenigstens in Teilbereichen des Lichtlenkungselements sich von der Rastergröße S 1 unterscheidet. Alternativ oder zusätzlich kann auch vorgesehen sein, dass mehrere Lichtquellen der Anordnung zur Lichtabgabe, insbesondere die erste und zweite punktförmige Lichtquelle 100 bzw. 200, eine zueinander unterschiedliche Lichtabstrahlung aufweisen. Besonders bevorzugt umfasst dies die Leuchtdichte, das Farbspektrum, die Farbtemperatur oder beispielsweise auch die Polarisation des Lichts. In einer Weiterbildung weist insbesondere die erste punktförmige Lichtquelle 100 eine zur zweiten punktförmigen Lichtquelle 200 unterschiedliche Lichtabstrahlung auf.

Mit Hilfe der erfindungsgemäßen Ausgestaltung der Anordnung zur Lichtabgabe bzw. des Lichtlenkungselements 500 kann so besonders vorteilhaft die Lichtmischung zweier benachbarter punktförmiger Lichtquellen erreicht werden. Mit Hilfe von Lichtquellen unterschiedlicher Lichtabstrahlung kann dies beispielsweise auch zur Farbmischung genutzt werden.

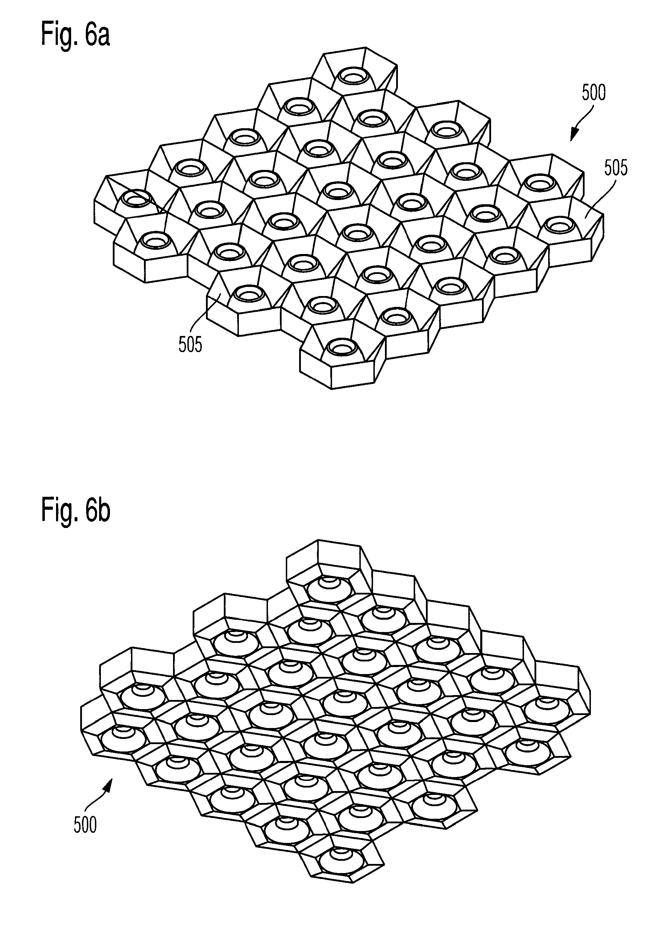

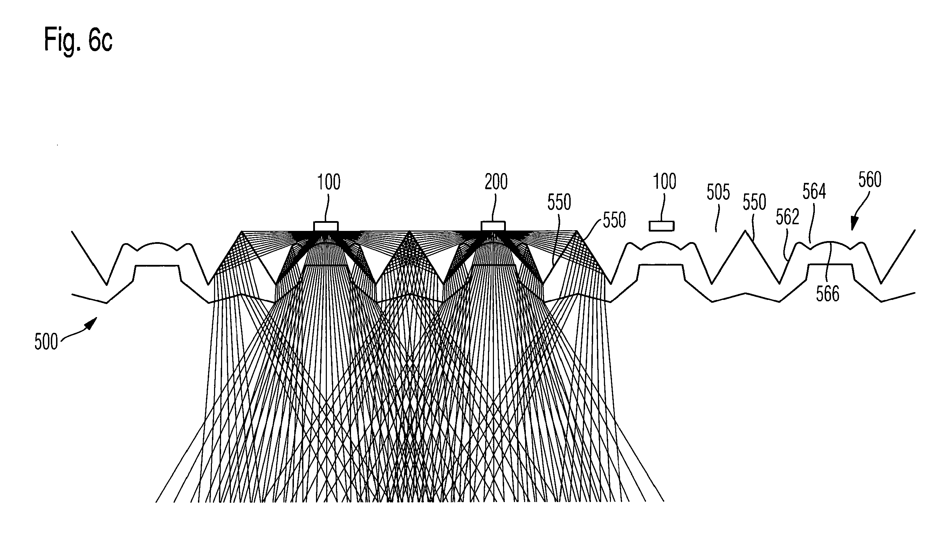

Die Figuren 6a bis 6c zeigen ein weiteres Ausführungsbeispiel eines erfindungsgemäß ausgestalteten Lichtlenkungselements 500, wobei Figur 6a eine Aufsicht, Figur 6b die Unterseite des Lichtlenkungselements 500 und Figur 6c eine Schnittdarstellung zeigt. Ebenso wie bei dem Ausführungsbeispiel gemäß den Figuren 3 und 3b sind die Lichtquellen 100, 200 und zugehörigen Kavitäten 505 des Lichtlenkungselements 500 in einer hexagonalen Struktur angeordnet, wobei - wie zuvor erwähnt - selbstverständlich auch andere regelmäßige Anordnungen zum Einsatz kommen können. Der Übergang zwischen zwei benachbarten Kavitäten 505 wird auch hier durch einen kooperativen Bereich gebildet, der durch die Flächen 550 begrenzt wird und nunmehr im Querschnitt im Wesentlichen dreieckförmig ausgebildet ist.

Eine erste Besonderheit der dargestellten Variante besteht darin, dass innerhalb der Kavitäten jeweils sich in Richtung der zugehörigen Lichtquelle 100 bzw. 200 deutlich erstreckende Erhebungen ausgebildet sind, welche nachfolgend als Linsenbereiche 560 bezeichnet werden. Wie der Schnittdarstellung entnommen werden kann, sind diese Linsenbereiche 560 hinsichtlich ihres Außenumfangs in etwa kegelstumpfartig ausgebildet, d.h., sie weisen entsprechend der Schnittdarstellung den Flächenabschnitten 550 gegenüberliegende Seitenwände 562 auf. Die Deckfläche 564 der Linsenbereiche 560 wiederum ist ebenfalls linsenartig ausgebildet und weist eine sich leicht verjüngende Vertiefung bzw. Ausnehmung 566 auf, deren Bodenfläche gewölbt ist.

Wie insbesondere den in Figur 6c dargestellten Strahlenverläufen entnommen werden kann, bewirken auch diese Linsenbereiche 560 eine Beeinflussung des von der dazugehörigen Lichtquelle 100 bzw. 200 abgegebenen Lichts in Form von Brechung und Totalreflexion, wobei allerdings im Gegensatz zu den kooperativen Bereichen ein Linsenbereich 560 ausschließlich das Licht der jeweils zugehörigen Lichtquelle 100, 200 beeinflusst. D.h., in Schnittdarstellung gesehen weist das Lichtlenkungselement 500 alternierend Linsenbereiche 560 auf, die ausschließlich das Licht der zugehörigen Lichtquelle 100, 200 beeinflussen, sowie kooperative Bereiche, welche das Licht der beiden benachbarten Lichtquellen 100, 200 beeinflussen.

Wie der Schnittdarstellung von Figur 6c ferner entnommen werden kann, ist die Unterseite des Lichtlenkungselements 500 mit weiteren abgewinkelten Flächenbereichen und Vertiefungen versehen, um die Lichtabgabe, die letztendlich erzielt wird, in der gewünschten Weise zu beeinflussen.

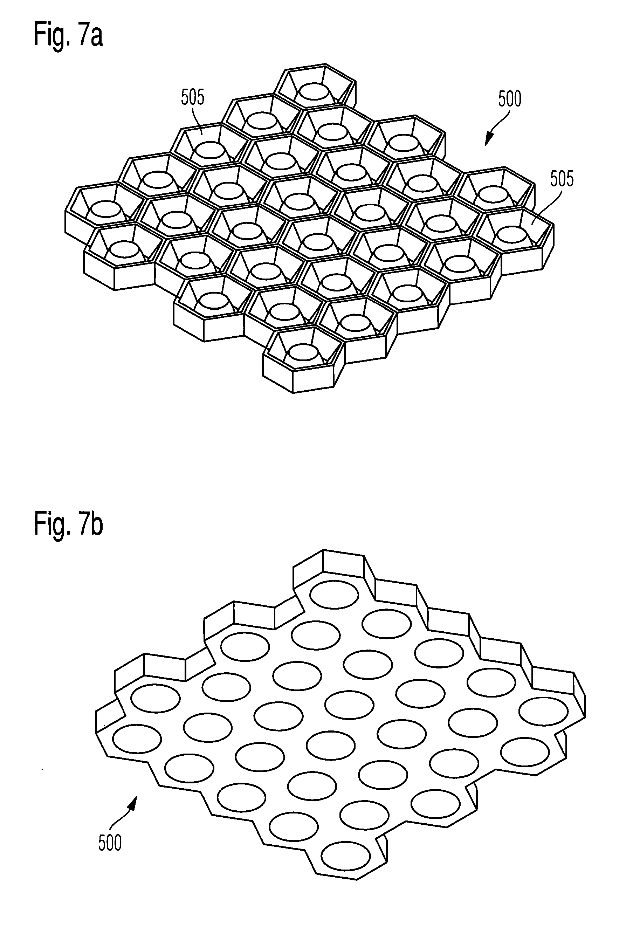

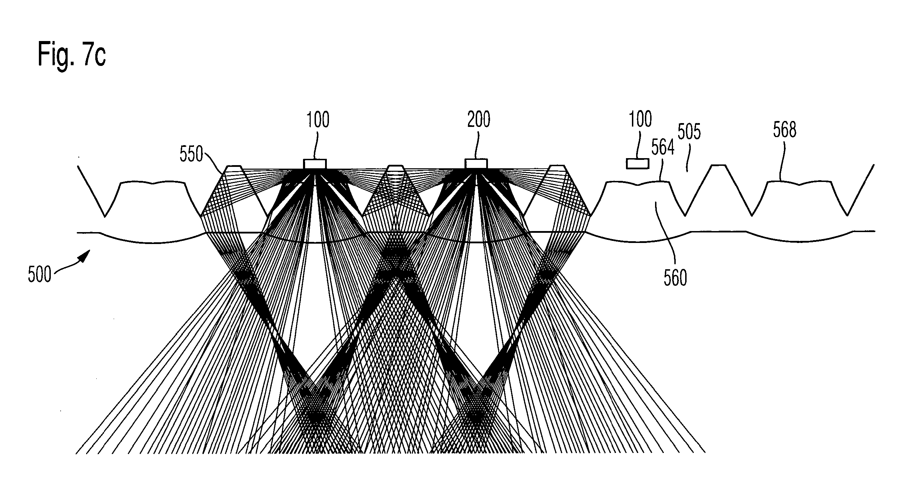

Auch bei dem Ausführungsbeispiel der Figuren 7a bis 7c ist im Bereich einer Kavität jeweils ein weiteres 560 Linsenelement vorgesehen, welches ausschließlich das Licht der darüber angeordneten Lichtquelle 100, 200 beeinflusst. Ein Unterschied zu dem Ausführungsbeispiel der Figuren 6a bis 6c besteht dabei darin, dass in diesem Fall die Deckfläche 564 des Linsenbereichs 560 anders ausgestaltet ist, nämlich eine zentrale, im Wesentlichen punktförmige Vertiefung 568 aufweist, zu der sich die Oberfläche vom Umfang aus hin in gewölbter Weise erstreckt. Ferner sind die Linsenbereiche 560 nunmehr an der Unterseite nicht mit einer Ausnehmung versehen sondern weisen stattdessen eine Kuppel bzw. kalottenförmige Vorwölbung auf. Letztendlich ergibt sich hierdurch eine andere Beeinflussung des Lichts der Lichtquellen 100, 200, wobei allerdings wiederum der zentrale Gedanke der Erfindung verwirklicht ist, dass nämlich aufgrund der die benachbarten Kavitäten 505 überbrückenden kooperativen Bereiche eine sehr effektive Lichtmischung erzielt wird und gleichzeitig auch die Lichtabstrahlcharakteristik in gewünschter Weise beeinflusst werden kann. Die Beispiele verdeutlichen dabei insbesondere, dass durch eine entsprechende Gestaltung der Kavitäten bzw. der darin befindlichen Linsenbereiche sowie der Unterseite des Lichtlenkungselements sehr effizient Einfluss auf die Lichtabstrahlcharakteristik der gesamten Anordnung bzw. auf die mit der Anordnung erzielbare Lichtverteilungskurve genommen werden kann.

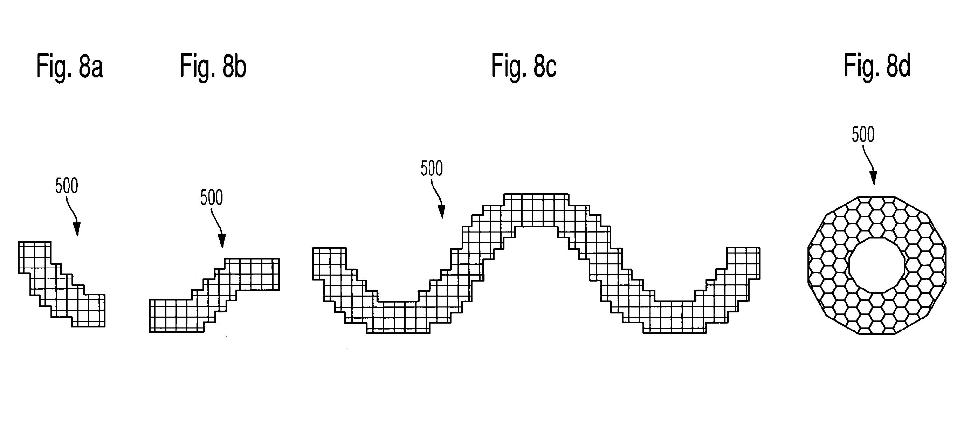

Die erfindungsgemäße Lösung eröffnet ferner die Möglichkeit zu einer vorteilhaften Fertigung bzw. Herstellung des Lichtlenkungselements 500 bzw. einer Anordnung zur Lichtabgabe. Die Figuren 8a bis 8d zeigen jeweils ein Lichtabgabeelement 500 das gemäß einem erfindungsgemäßen Verfahren zur Herstellung eines Lichtlenkungselements 500 gefertigt ist.

Dazu ist vorgesehen, ein erfindungsgemäßes bevorzugt flächig ausgestaltetes Lichtlenkungselement 500 zu fertigen. Beispielsweise könnte ein transparentes Lichtlenkungselement bevorzugt aus PMMA, bevorzugt in einem Spritzgussverfahren hergestellt sein. In einem weiteren Schritt ist nun vorgesehen, das Lichtlenkungselement 500 so zu formen, dass die gewünschte Form resultiert.

Beispielsweise könnte vorgesehen sein, das Lichtlenkungselement 500 entsprechend zu schneiden, sodass die in den Figuren 8a bis8d dargestellten wellenförmigen, bogenförmigen oder kreis- bzw. "donut"-förmigen Lichtlenkungselemente 500 resultieren. Darüber hinaus sind beispielsweise auch Linien, Rechtecke, Quadrate, Stufen oder Kreise als Grundform des Lichtlenkungselements 500 denkbar. Insbesondere ist so eine leichte Anpassbarkeit der gewünschten Lichtabgabe realisierbar. Besonders bevorzugt ist dazu ein Laserschneidverfahren bzw. ein anderes lokales beschränktes Formungsverfahren, insbesondere ein Aufschmelz- oder Ablationsverfahren denkbar, welches entsprechende Werkzeugkosten deutlich reduzieren kann.

Aus dem Vorbeschriebenen wird deutlich, dass die Erfindung die Möglichkeiten zur Kombination der Lichtabgabe mehrerer punktförmiger Lichtquellen deutlich optimiert. Abschließend ist darauf hinzuweisen, dass die Kombination von Merkmalen verschiedener Ausführungsbeispiele bzw. Verfahren oder in Figuren offenbarter Merkmale erfindungsgemäß eingeschlossen ist.

## Patentansprüche

1. Anordnung zur Lichtabgabe,
aufweisend
• mehrere im wesentlichen punktförmig Lichtquellen (100, 200) sowie
• ein Lichtlenkungselement (500) mit einer Begrenzungsfläche bzw. einem Begrenzungsflächenabschnitt (550), welche bzw. welcher im Strahlengang des Lichts sowohl einer ersten Lichtquelle (100) als auch einer zweiten Lichtquelle (200) angeordnet ist,
**dadurch gekennzeichnet,**
**dass** die Begrenzungsfläche bzw. der Begrenzungsflächenabschnitt (550) eine Lichteintrittsfläche für das Licht der ersten Lichtquelle (100) in das Lichtlenkungselement (500) und die Begrenzungsfläche bzw. der Begrenzungsflächenabschnitt (550) gleichzeitig auf seiner von der Lichteintrittsfläche abgewandten Seite eine Reflexionsfläche für das Licht der zweiten Lichtquelle (200) bildet.

2. Anordnung zur Lichtabgabe Anspruch 1,
**dadurch gekennzeichnet,**
**dass** das Lichtlenkungselement (500) Kavitäten (505) aufweist, in denen jeweils eine der Lichtquellen (100, 200) angeordnet ist,
wobei vorzugsweise die Begrenzungsfläche bzw. der Begrenzungsflächenabschnitt (550) eine Begrenzungsfläche bzw. einen Begrenzungsflächenabschnitt einer Kavität (505), insbesondere zumindest einen Teil der Mantelfläche der Kavität (505) bildet.

3. Anordnung zur Lichtabgabe nach Anspruch 2,
**dadurch gekennzeichnet,**
**dass** jede Kavität (505) einen sich von der Bodenfläche in Richtung der Lichtquelle (100, 200) erstreckenden, von der Mantelfläche getrennten Linsenbereich (560) aufweist, der vorzugsweise kegelstumpfartig geformt ist.

4. Anordnung zur Lichtabgabe nach Anspruch 3,
**dadurch gekennzeichnet,**
**dass** die Deckfläche (564) des Linsenbereichs (560) konkav oder konvex geformt ist.

5. Anordnung zur Lichtabgabe nach Anspruch 3,
**dadurch gekennzeichnet,**
**dass** die Deckfläche (564) des Linsenbereichs (560) eine Vertiefung aufweist.

6. Anordnung zur Lichtabgabe nach einem der Ansprüche 2 bis 5,
**dadurch gekennzeichnet,**
**dass** den Kavitäten (505) gegenüberliegende Lichtaustrittsflächen des Lichtlenkungselement (500) linsenartig ausgebildet, insbesondere konkav oder konvex geformt sind.

7. Anordnung zur Lichtabgabe nach einem der Ansprüche 2 bis 6,
**dadurch gekennzeichnet,**
**dass** die Kavitäten (505) eine polygonale Grundfläche bzw. eine polygonale Flächenprojektion aufweisen.

8. Anordnung zur Lichtabgabe nach einem der vorhergehenden Ansprüche,
**dadurch gekennzeichnet,**
**dass** Reflexion des Lichts der zweiten Lichtquelle (200) an der Begrenzungsfläche bzw. dem Begrenzungsflächenabschnitt (550) durch Totalreflexion erfolgt.

9. Anordnung zur Lichtabgabe nach einem der vorhergehenden Ansprüche,
**dadurch gekennzeichnet,**
**dass** die Lichtabgabe der Anordnung zur Lichtabgabe homogen ist,
wobei das Lichtlenkungselement (500) bevorzugt zur Kollimation des Lichts der Lichtquellen (100, 200) ausgebildet ist.

10. Anordnung zur Lichtabgabe nach einem der vorhergehenden Ansprüche,
**dadurch gekennzeichnet,**
**dass** die Begrenzungsfläche bzw. der Begrenzungsflächenabschnitt (550) eben ausgebildet ist.

11. Anordnung zur Lichtabgabe nach einem der Ansprüche 1 bis 9,
**dadurch gekennzeichnet,**
**dass** die Begrenzungsfläche bzw. der Begrenzungsflächenabschnitt (550) gekrümmt, insbesondere parabolisch, ausgebildet ist.

12. Anordnung zur Lichtabgabe nach einem der vorhergehenden Ansprüche,
**dadurch gekennzeichnet,**
**dass** die Lichtquellen (100, 200) in einer Reihe oder einem zweidimensionalen Raster angeordnet sind.

13. Anordnung zur Lichtabgabe nach einem der vorhergehenden Ansprüche,
**dadurch gekennzeichnet,**
**dass** die Lichtquellen (100, 200) auf einem, bevorzugt ebenen, gemeinsamen Trägerelement angeordnet sind.

14. Anordnung zur Lichtabgabe nach einem der vorhergehenden Ansprüche,
**dadurch gekennzeichnet,**
**dass** diese mehrere Lichtquellen (100, 200) mit zueinander unterschiedlicher Lichtabstrahlung, insbesondere unterschiedlichem Farbspektrum bzw. unterschiedlicher Farbtemperatur, umfasst, die bevorzugt in einem regelmäßigen Raster angeordnet sind.

15. Lichtlenkungselement (500) zur Beeinflussung des Lichts von zumindest zwei nebeneinander angeordneten, im Wesentlichen punktförmigen Lichtquellen (100, 200), mit einer Begrenzungsfläche bzw. einem Begrenzungsflächenabschnitt (550), welche bzw. welcher im Strahlengang des Lichts sowohl der ersten Lichtquelle (100) als auch der zweiten Lichtquelle (200) angeordnet ist,
**dadurch gekennzeichnet,**
**dass** die Begrenzungsfläche bzw. der Begrenzungsflächenabschnitt (550) eine Lichteintrittsfläche für das Licht der ersten Lichtquelle (100) in das Lichtlenkungselement (500) und die Begrenzungsfläche bzw. der Begrenzungsflächenabschnitt (550) auf seiner von der Lichteintrittsfläche abgewandten Seite gleichzeitig eine Reflexionsfläche für das Licht der zweiten Lichtquelle (200) bildet.

16. Verfahren zur Herstellung eines Lichtlenkungselements (500) für eine Anordnung zur Lichtabgabe nach einem der vorhergehenden Ansprüche umfassend die Schritte,
A) Herstellen, insbesondere Spritzgießen, eines im Wesentlichen flächigen Lichtlenkungselements (500),
B) Formen des Lichtlenkungselements (500), insbesondere Schneiden, so, dass eine gewünschte Form des Lichtlenkungselements resultiert.

## Claims

1. Arrangement for emitting light, having
• several, essentially point-shaped light sources (100, 200) as well as
• a light controlling element (500) with a limiting area or a limiting area section (550), which is arranged in the ray path of the light of both a first light source (100) and a second light source (200),
**characterized in that**
the limiting area or the limiting area section (550) forms a light entry area for the light of the first light source (100) into the light controlling element (500) and the limiting area or the limiting area section (550) at the same time forms on its side facing away from the light entry area a reflection area for the light of the second light source (200).

2. Arrangement for emitting light according to claim 1, **characterized in that** the light controlling element (500) has cavities (505) in which one of the light sources (100, 200) is respectively arranged, wherein preferably the limiting area or the limiting area section (550) forms a limiting area or a limiting area section of a cavity (505), in particular at least a part of the lateral surface of the cavity (505).

3. Arrangement for emitting light according to claim 2, **characterized in that** each cavity (505) has a lens area (560), extending from the bottom area in the direction of the light source (100, 200) and separated from the lateral surface, that preferably has a truncated cone-like shape.

4. Arrangement for emitting light according to claim 3, **characterized in that** the cover area (564) of the lens area (560) has a concave or convex shape.

5. Arrangement for emitting light according to claim 3, **characterized in that** the cover area (564) of the lens area (560) has a recess.

6. Arrangement for emitting light according to one of claims 2 to 5, **characterized in that** the light exit areas of the light controlling element (500) opposite the cavities (505) are configured lens-like, in particularly have a concave or convex shape.

7. Arrangement for emitting light according to one of claims 2 to 6, **characterized in that** the cavities (505) have a polygonal base area or a polygonal surface projection.

8. Arrangement for emitting light according to one of the preceding claims, **characterized in that** the light reflection of the second light source (200) takes place on the limiting area or the limiting area section (550) by means of total reflection.

9. Arrangement for emitting light according to one of the preceding claims, **characterized in that** the light emission of the arrangement for emitting light is homogenous, wherein the light controlling element (500) is preferably configured for collimating the light of the light sources (100, 200).

10. Arrangement for emitting light according to one of the preceding claims, **characterized in that** the limiting area or the limiting area section (550) is plane.

11. Arrangement for emitting light according to one of claims 1 to 9, **characterized in that** the limiting area or the limiting area section (550) is configured curved, in particular parabolic.

12. Arrangement for emitting light according to one of the preceding claims, **characterized in that** the light sources (100, 200) are arranged in a row or a two-dimensional grid.

13. Arrangement for emitting light according to one of the preceding claims, **characterized in that** the light sources (100, 200) are arranged on a, preferably plane, common support element.

14. Arrangement for emitting light according to one of the preceding claims, **characterized in that** it comprises several light sources (100, 200), with light emittance that is different to each other, in particular different color spectrum or different color temperature, that are preferably arranged in a regular grid.

15. Light controlling element (500) for influencing the light of at least two light sources (100, 200), being arranged next to each other and essentially point-shaped, with a limiting area or a limiting area section which is arranged in the ray path of the light of both the first light source (100) and the second light source (200), **characterized in that** the limiting area or the limiting area section (550) forms a light entry area for the light of the first light source (100) into the light controlling element (500) and the limiting area or the limiting area section (550) at the same time on its side facing away from the light entry area forms a reflection area for the light of the second light source (200).

16. Method for manufacturing a light controlling element (500) for an arrangement for emitting light according to one of the preceding claims, comprising the steps of
A) Manufacturing, in particular injection molding, an essentially planar light controlling element (500),
B) Shaping the light controlling element (500), in particular cutting, in such a way that it results in a desired shape of the light controlling element.

## Revendications

1. Ensemble destiné à émettre de la lumière, ayant
• plusieurs sources lumineuses essentiellement ponctuelles (100, 200)
ainsi que
• un élément de commande de lumière (500), comportant une surface limite ou une section de surface limite (550), étant disposé sur le trajet des rayons de la lumière à la fois d'une première source lumineuse (100) et d'une seconde source lumineuse (200),
**caractérisé en ce que**
la surface limite ou la section de surface limite (550) forme une surface d'entrée de lumière pour la lumière de la première source lumineuse (100) dans l'élément de commande de lumière (500) et la surface limite ou la section de surface limite (550) au même moment forme sur son côté situé à l'opposé de la surface d'entrée de lumière une surface de réflexion pour la lumière de la seconde source lumineuse (200).

2. Ensemble destiné à émettre de la lumière selon la revendication 1, **caractérisé en ce que** l'élément de commande de lumière (500) possède des cavités (505) dans lesquelles l'une des sources lumineuses (100, 200) est respectivement disposée, dans lequel, de préférence, la surface limite ou la section de surface limite (550) forme une surface limite ou une section de surface limite d'une cavité (505) en particulier, au moins une partie de la surface latérale de la cavité (505).

3. Ensemble destiné à émettre de la lumière selon la revendication 2, **caractérisé en ce que** chaque cavité (505) possède une zone de lentille (560), se développant de la surface inférieure dans la direction de la source lumineuse (100, 200) et séparée de la surface latérale qui, de préférence, a une forme de cône tronqué.

4. Ensemble destiné à émettre de la lumière selon la revendication 3, **caractérisé en ce que** la zone de recouvrement (564) de la zone de lentille (560) possède une forme concave ou convexe.

5. Ensemble destiné à émettre de la lumière selon la revendication 3, **caractérisé en ce que** la surface de recouvrement (564) de la zone de lentille (560) possède un renfoncement.

6. Ensemble destiné à émettre de la lumière selon l'une des revendications de 2 à 5, **caractérisé en ce que** les surfaces de sortie de lumière de l'élément de commande de lumière (500) opposées aux cavités (505) sont configurées comme des lentilles, et possèdent, en particulier, une forme concave ou convexe.

7. Ensemble destiné à émettre de la lumière selon l'une des revendications de 2 à 6, **caractérisé en ce que** les cavités (505) possèdent une base polygonale ou une projection de surface polygonale.

8. Ensemble destiné à émettre de la lumière selon l'une des revendications précédentes, **caractérisé en ce que** la réflexion de lumière de la seconde source lumineuse (200) se déroule sur la surface limite ou la section de surface limite (550) au moyen d'une réflexion totale.

9. Ensemble destiné à émettre de la lumière selon l'une des revendications précédentes, **caractérisé en ce que** l'émission de lumière de l'ensemble destiné à émettre de la lumière est homogène, dans lequel l'élément de commande de lumière (500) est, de préférence, configuré pour effectuer une collimation de la lumière des sources lumineuses (100, 200).

10. Ensemble destiné à émettre de la lumière selon l'une des revendications précédentes, **caractérisé en ce que** la surface limite ou la section de surface limite (550) est plate.

11. Ensemble destiné à émettre de la lumière selon l'une des revendications de 1 à 9, **caractérisé en ce que** la surface limite ou la section de surface limite (550) est configurée incurvée, en particulier parabolique.

12. Ensemble destiné à émettre de la lumière selon l'une des revendications précédentes, **caractérisé en ce que** les sources lumineuses (100, 200) sont disposées dans une rangée ou une grille bidimensionnelle.

13. Ensemble destiné à émettre de la lumière selon l'une des revendications précédentes, **caractérisé en ce que** les sources lumineuses (100, 200) sont disposées sur un élément de support commun, de préférence plan.

14. Ensemble destiné à émettre de la lumière selon l'une des revendications précédentes, **caractérisé en ce qu'**il comprend plusieurs sources lumineuses (100, 200) ayant une exitance lumineuse étant différente les unes des autres, en particulier d'un spectre de couleur différent ou d'une température de couleur différente, qui sont de préférence disposées dans une grille régulière.

15. Élément de commande de lumière (500) destiné à influencer la lumière d'au moins deux sources lumineuses (100, 200) étant disposées l'une à côté de l'autre et essentiellement ponctuelles, ayant une surface limite ou une section de surface limite qui est disposée sur le trajet des rayons de la lumière à la fois d'une première source lumineuse (100) et d'une seconde source lumineuse (200), **caractérisé en ce que** la surface limite ou la section de surface limite (550) forme une surface d'entrée de lumière pour la lumière de la première source lumineuse (100) dans l'élément de commande de lumière (500) et la surface limite ou la section de surface limite (550), au même moment, sur son côté situé à l'opposé de la surface d'entrée de lumière forme une surface de réflexion pour la lumière de la seconde source lumineuse (200).

16. Procédé de fabrication d'un élément de commande de lumière (500) pour un ensemble destiné à émettre de la lumière selon l'une des revendications précédentes, comprenant les étapes de :
A) fabriquer, en particulier par moulage par injection, un élément de commande de lumière essentiellement planaire (500),
B) donner forme à l'élément de commande de lumière (500), en particulier par découpage, de manière à aboutir à une forme voulue de l'élément de commande de lumière.
